# EUROPÄISCHE PATENTSCHRIFT

(11) **EP 1 223 179 B1**
(45) Veröffentlichungstag und Bekanntmachung des Hinweises auf die Patenterteilung: **17.03.2004**
(21) Anmeldenummer: 01129788.4
(22) Anmeldetag: 14.12.2001
(51) Int. Cl.: C08F 12/04, C08J 9/20, C08F 2/18

(54) **Verfahren zur Herstellung wasserexpandierbarer Styrolpolymerisate**
Method for producing water expandable styrene polymers
Procédé de fabrication de polymères styrène expansibles à l'aide d'eau

(30) Priorität: 13.01.2001 DE 10101402
(43) Veröffentlichungstag der Anmeldung: 17.07.2002
(73) Patentinhaber: BASF AKTIENGESELLSCHAFT, 67056 Ludwigshafen (DE)
(72) Erfinder: Lausberg, Dietrich, Dr., 67065 Ludwigshafen (DE); Hahn, Klaus, Dr., 67281 Kirchheim (DE)

(56) Entgegenhaltungen:
- WO-A-99/48936
- US-A- 3 361 687

## Beschreibung

Die Erfindung betrifft ein Verfahren zur Herstellung wasserexpandierbarer Styrolpolymerisate (WEPS) durch Polymerisation von Styrol in wässriger Suspension, wobei die suspendierten Styroltröpfchen Wasser in feiner Verteilung emulgiert enthalten.

Teilchenförmige expandierbare Styrolpolymerisate (EPS) werden normalerweise hergestellt durch Polymerisation von Styrol in wässriger Suspension in Gegenwart eines flüchtigen organischen Treibmittels. Übliche Treibmittel sind Kohlenwasserstoffe, insbesondere Pentan. Aus Umweltschutzgründen muß bei der Herstellung und Verarbeitung von EPS emittiertes Pentan wieder aufgefangen werden. Dies ist aufwendig und kostenintensiv. Es ist daher sinnvoll diese organischen Substanzen längerfristig durch unbedenklichere Treibmittel zu ersetzen, beispielsweise durch Wasser.

In einer Dissertation der Universität Eindhoven "Water Expandable Polystyrene" von J.J. Crevecoeur aus dem Jahr 1997 ist ein Verfahren zur Herstellung von WEPS beschrieben, bei dem zunächst Wasser in feiner Verteilung in Styrol mit Hilfe von oberflächenaktiven Substanzen emulgiert, das Styrol bis zu einem Umsatz von 50 % polymerisiert, die Mischung unter Phasenumkehr in Wasser suspendiert und das Styrol schließlich mit Hilfe von Peroxid-Initiatoren auspolymerisiert wird. Als oberflächenaktive Substanzen werden amphiphile Emulgatoren eingesetzt, z.B. Natrium-Bis-(2-ethylhexyl)-sulfosuccinat oder Natrium-Styrolsulfonat oder Blockcopolymere aus Polystyrol-Blöcken und Polystyrolsulfonat-Blöcken. Alle diese Substanzen weisen sowohl einen hydrophilen als auch einen hydrophoben Rest auf und sind daher in der Lage, Wasser in Styrol zu emulgieren. Weitere Zweistufenverfahren sind in WO 98/01489 und WO 98/01501 beschrieben.

Nach den Patentanmeldungen WO 99/48936, WO 99/48956 und WO 98/48957 wird WEPS in einem Einstufenverfahren direkt in wäßriger Suspension hergestellt, wobei als Emulgierhilfsmittel thermolabile organische Verbindungen, feinteilige anorganische Festsubstanzen bzw. EPS-Recyclate eingesetzt werden.

Bei allen genannten Verfahren entstehen WEPS-Partikel, die Wasser als einziges Treibmittel enthalten. Diese können aber nicht nach üblichen EPS-Schäumverfahren mit heißem Wasserdampf vorgeschäumt werden, man muß vielmehr mit über 100°C heißer Luft arbeiten oder heiße Öl- bzw. Silikonölbäder anwenden.

Der Erfindung lag daher die Aufgabe zugrunde, Wasser als Treibmittel enthaltende Polystyrol-Partikel bereitzustellen, die auch in üblichen Vorschäum-Apparaturen mit gewöhnlichem Wasserdampf expandiert werden können.

Diese Aufgabe wird durch das erfindungsgemäße Verfahren gelöst, bei dem das Suspensionsmedium ein Gemisch aus Wasser und einer organischen Flüssigkeit ist, die mit Wasser mischbar ist, Polystyrol praktisch nicht löst und einen Siedepunkt unterhalb von 100°C aufweist.

Die erfindungsgemäße Suspensionspolymerisation wird bevorzugt in einer Stufe ohne vorherige Massepolymerisation durchgeführt. Dabei können die bekannten Emulgierhilfsmittel angewandt werden, die bewirken, daß Wasser in feiner Verteilung in den suspendierten Styroltröpfchen emulgiert wird, z.B.:
a) Wasser- und styrolunlösliche anorganische Festsubstanzen mit einer mittleren Teilchengröße von höchstens 20 µm und einer Dichte von höher als 1,1 g/cm³ in einer Menge von 0,1 bis 15 Gew.-%, bezogen auf die Monomeren, wie in WO 99/48957 beschrieben. Geeignet sind z.B. Kieselgel, Silikate, Metalloxide, Metallhydroxide und Metallsalze, bevorzugt sind 0,2 bis 5 Gew.-% Ruß mit einer mittleren Teilchengröße von 10 bis 500 Nm und 0,4 bis 10 Gew.-% Graphit mit einer mittleren Teilchengröße (längster Blättchendurchmesser) von 1 bis 30 µm, vorzugsweise 2 bis 20 µm.
b) EPS-Recyclat, das von seiner Herstellung her noch übliche amphiphile Beschichtungsmittel enthält, nach WO 99/48956. Das EPS-Recyclat wird in einer Menge von 5 bis 30 Gew.-%, bezogen auf die Monomeren, als styrolische Lösung der Suspension zugesetzt. EPS-Recyclat enthält im allgemeinen 0,1 bis 2 Gew.-% Beschichtungsmittel,z.B. Antistatika, wie quartäre Ammoniumalkylsulfonate, aliphatische Sulfonate oder oxalkylierte Ammoniumsalze; Antiverklebungsmittel, wie Metallsalze von Fettsäuren, z.B. Zinkstearat, ferner Fettsäureester und Fettsäureamide; Mittel zur Kühlzeitverkürzung, wie Glycerinester und hydrophobe Ester aus Fettsäuren oder Fettalkoholen, z.B. Glycerinmonostearat oder Tristearylcitrat.
c) In Styrol lösliche oder dispergierbare, thermolabile organische Verbindungen, die bei erhöhter Temperatur in amphiphile und/oder hydrophile Verbindung ganz oder teilweise zerfallen oder hydrolysiert werden, nach WO 99/48936. Die Zerfallstemperatur sollte oberhalb von 80°C liegen, aber unterhalb der maximalen Polymerisationstemperatur. Sie werden in einer Menge von 0,1 bis 5 Gew.-%, bezogen auf die Monomeren, eingesetzt. Geeignet sind Halogenverbindungen, wie Hexabromcyclododecan mit einer Zerfallstemperatur von 125°C (im Polymerisationsmedium) ferner 1,1,2,2-Tetrabromethan mit einer Zerfallstemperatur von 128°C oder Chlorparaffine mit einer Zerfallstemperatur von etwa 130°C. Beim Zerfall bzw. bei der Hydrolyse dieser Halogenverbindungen bilden sich amphiphile Kohlenwasserstoffverbindungen, die eine hydrophile Hydroxylgruppe tragen, und daneben hydrophile Halogenwasserstoffe. Geeignet sind auch Peroxide, wie z.B. Dibenzoylperoxid mit einer Zerfallstemperatur von 80°C, tert.-Butylperoxy-2-ethylhexanoat mit einer Zerfallstemperatur von 80°C, sowie Dicumylperoxid mit einer Zerfallstemperatur von 110°C. Beim Zerfall dieser Peroxide bilden sich wieder amphiphile Kohlenwasserstoffverbindungen, die Carboxylgruppen oder Hydroxylgruppen tragen. Ferner sind geeignet organische Phosphorverbindungen, wie z.B. Arylphosphate und deren Derivate.
d) Amphiphile organische Emulgatoren, die sowohl hydrophile als auch hydrophobe Gruppen tragen, nach WO 98/01489, vorzugsweise in Mengen von 0,1 bis 5 Gew.-%, bezogen auf die Monomeren. Bevorzugt sind Bisalkylsulfosuccinate, Sorbitol-C₈-C₂₀-Carboxylate und C₈-C₂₀-Alkylxylen-Sulfonate.
e) Polare Gruppen tragende, wasserlösliche Polymere nach WO 98/01501, vorzugsweise in Mengen von 2 bis 20 Gew.-%, bezogen auf die Monomeren. Bevorzugt ist Polyvinylpyrrolidon, daneben sind auch Stärke, veresterte Stärke, Polyvinylalkohol, Polyvinylacetat, Polyacrylsäure, Polyethylenglykole und Cellulosederivate.

Eine Alternative ist das Zweistufenverfahren, bei dem die Monomeren zunächst in Masse bis zu einem Umsatz von 15 bis 70 %, vorzugsweise von 25 bis 50 % vorpolymerisiert und das Präpolymere, welches ein Emulgierhilfsmittel enthält, in dem Suspensionsmedium suspendiert und dort auspolymerisiert wird. Dieses Zweistufenverfahren ist in WO 98/01489 und WO 98/01501 ausführlich beschrieben. Das Emulgierhilfsmittel kann schon bei der Präpolymerisation anwesend sein, es kann aber auch nach dessen Beendigung zugesetzt werden. Es können die oben beschriebenen Emulsionshilfsmittel, vorzugsweise die unter d) und e) aufgeführten verwendet werden. Die Präpolymerisation wird unter üblichen Massepolymerisations-Bedingungen durchgeführt, vorzugsweise bei 80 bis 120°C in Gegenwart von Radikalinitiatoren. Nach einem Umsatz von 15 bei 70 %, vorzugsweise 25 bis 50 % wird die viskose Präpolymerisationslösung in den Suspensionsmedium suspendiert. Es ist möglich, das später als Treibmittel wirkende Wasser schon während der Präpolymerisation zuzusetzen.

In beiden Fällen wird die erfindungsgemäße Polymerisation in Suspension zu Ende geführt, wobei das Suspensionsmedium ein Gemisch aus Wasser und einer organischen Flüssigkeit ist im Gewichtsverhältnis 95:5 bis 50:50, insbesondere von 95:5 bis 75:25. Die organische Flüssigkeit soll mit Wasser mischbar sein und Polystyrol praktisch, vorzugsweise überhaupt nicht lösen. Ihr Siedepunkt soll unterhalb von 100°C, insbesondere zwischen 40 und 80°C, liegen. Geeignete organische Flüssigkeiten sind C₁-C₃-Alkohole, C₃-C₅-Ketone und C₁-C₅-Aldehyde. Besonders bevorzugt ist Ethanol. Darüber hinaus kann das Suspensionsmedium C₄-C₇-Alkane, insbesondere Pentan, enthalten, vorzugsweise in Mengen von bis zu 3 Gew.-%, bezogen auf die Monomeren.

Bei der erfindungsgemäßen Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylethen oder α-Methylstyrol ersetzt sein.

Bei der Suspensionspolymerisation können die üblichen Hilfsmittel, wie z.B. Suspensionsstabilisatoren, Radikalinitiatoren, Flammschutzmittel, Kettenüberträger, Expandierhilfsmittel, Keimbildner und Weichmacher zugesetzt werden. Es ist vorteilhaft, als Suspensionsstabilisatoren anorganische Pickering-Dispergatoren, z.B. Magnesiumpyrophosphat oder Tricalciumphosphat, in Kombination mit geringen Mengen Alkylsulfonaten einzusetzen. Bevorzugte Flammschutzmittel sind organische Bromverbindungen, wie Hexabromcyclododecan, die in Mengen von 0,1 bis 2 Gew.-%, bezogen auf die Monomeren zugesetzt werden.

Es ist günstig, die Polymerisation in Gegenwart von 1 bis 30, vorzugsweise 3 bis 15 Gew.-% Polystyrol durchzuführen, welches zweckmäßigerweise als styrolische Lösung eingesetzt wird. Statt reinem Polystyrol kann auch Polystyrol-Recyclat verwendet werden.

Das Emulgierhilfsmittel wird bevorzugt gleich zu Beginn der Suspensionspolymerisation zugesetzt, man kann aber auch im Verlauf der Polymerisation bis zu einem Umsatz von 90 % zudosieren.

Die Suspensionspolymerisation wird zweckmäßigerweise in zwei Temperaturstufen durchgeführt, wobei zwei bei unterschiedlichen Temperaturen zerfallende Peroxid-Initiatoren eingesetzt werden. Zunächst wird die Suspension auf 80° bis 90°C erhitzt, wobei das erste Peroxid, z.B. Dibenzoylperoxid, zerfällt und die Polymerisation einleitet. Dann läßt man die Temperatur langsam auf 100 bis 140°C ansteigen. Dabei zerfällt dann das zweite Peroxid, z.B. Dicumylperoxid oder Di-tert.butylperbenzoat.

Während der Suspensionspolymerisation sollte der Ansatz kräftig gerührt werden. Dadurch, und unterstützt durch das Emulgierhilfsmittel, wird in den suspendierten Styroltröpfchen bzw. Präpolymerisattröpfchen Wasser in feiner Verteilung emulgiert.

Die erfindungsgemäß hergestellten, expandierbaren Styrolpolymerisate enthalten als Treibmittel 2 bis 20 Gew.-%, vorzugsweise 5 bis 15 Gew.-% Wasser und 0,1 bis 10 Gew.-%, vorzugsweise 0,2 bis 10 Gew.-% der organischen Flüssigkeit, sowie gegebenenfalls bis zu 3 Gew.-%, insbesondere 0,2 bis 2,5 Gew.-% eines C₄-C₇-Alkans, vorzugsweise Pentan. Die organische Flüssigkeit setzt den Siedepunkt des Treibmittels herab und bewirkt, daß die WEPS-Partikel mit 100° bis 110°C heißem Wasserdampf geschäumt werden können. Das mit Polystyrol mischbare Alkan setzt dessen Erweichungstemperatur herab und trägt dadurch ebenfalls zu der Erniedrigung der Schäumtemperatur bei.

Die Partikelgröße der WEPS-Partikel beträgt 0,2 bis 5, vorzugsweise 0,5 bis 2 mm. Sie können auf üblichen Vorschäumern mit Wasserdampf zu Schaumstoffpartikeln expandiert werden, wobei ein- oder mehrmals geschäumt werden kann.

Die WEPS-Schaumpartikel können wie herkömmliche EPS-Schaumpartikel zu Schaumstoff-Platten, -Blöcken oder -Formteilen mit Dichten von 10 bis 100 g/l verschweißt werden, die als Isolieroder Verpackungsmaterialien verwendet werden können.

Die im Beispiel genannten Prozente beziehen sich auf das Gewicht.

### Beispiel

In 17,03 kg Styrol werden 2,55 kg Polystyrol (PS 158 K der BASF) gelöst und 340 g (2 %) pulverförmiges Graphit UF, Kropfmühle KG, mittlere Teilchengröße 4 µm, homogen suspendiert unter Beimischung von 59,6 g Dicumylperoxid und 20,4 g Dibenzoylperoxid. Die organische Phase wird in eine Mischung aus 18,5 kg Wasser und 1,5 kg Ethanol in einem 50 1 Rührkessel eingebracht. Die wässrige Ethanol-Phase enthält eine Füllung aus 69,8 g Natriumpyrophosphat und 129,5 g Magnesiumsulfat. Man erhitzt die Suspension unter Rühren auf 80°C. Die Rührerdrehzahl betrug hierbei 140 Upm. Nach 140 Minuten wird 3,51 g Alkylsulfonat zugegeben. Schließlich wird bei 134°C auspolymerisiert. Nach dem Abtrennen der wässrigen Phase erhält man ein perlförmiges Granulat, welches 8 % Wasser und 0,6 % Ethanol enthält.

Das Produkt konnte mit 105°C heißen Wasserdampf geschäumt werden. Dabei expandierte das Produkt auf das 12-fache seines ursprünglichen Schüttgewichts von ca. 600 g/l. Das vorgeschäumte Produkt wurde anschließend getrocknet und in einem zweiten Expansionsschritt mit Wasserdampf auf eine Schüttdichte unter 12 g/l geschäumt.

## Patentansprüche

1. Verfahren zur Herstellung von Wasser als Treibmittel enthaltenden Styrolpolymerisaten durch Polymerisation von Styrol, gegebenenfalls zusammen mit Comonomeren, in Suspension, wobei die suspendierten Styroltröpfchen Wasser in feiner Verteilung emulgiert enthalten und ein Emulgierhilfsmittel anwesend ist, **dadurch gekennzeichnet, daß** das Suspensionsmedium ein Gemisch aus Wasser und einer organischen Flüssigkeit ist, die mit Wasser mischbar ist, Polystyrol praktisch nicht löst und einen Siedepunkt unterhalb von 100°C aufweist, wobei das Gewichtsverhältnis Wasser zu der organischen Flüssigkeit 95:5 bis 50:50 beträgt.

2. Verfahren nach Anspruch 1, **dadurch gekennzeichnet, daß** die Suspensionspolymerisation in einer Stufe ohne vorherige Massepolymerisation durchgeführt wird.

3. Verfahren nach Anspruch 2, **dadurch gekennzeichnet, daß** das Emulgierhilfsmittel ausgewählt ist aus
a) einer wasser- und styrolunlöslichen anorganischen Festsubstanz mit einer mittleren Teilchengröße von höchstens 20 µm und einer Dichte von höher als 1,1 g/cm³,
b) recycliertem Polystyrol-Partikelschaumstoff (EPS-Recyclat), der von seiner Herstellung her noch übliche, amphiphile Beschichtungsmittel enthält,
c) einer in Styrol löslichen oder dispergierbaren, thermolabilen organischen Verbindung, die bei erhöhter Temperatur in amphiphile und/oder hydrophile Verbindungen teilweise oder ganz zerfällt bzw. hydrolysiert wird,
d) einem amphiphilen organischen Emulgator, der sowohl hydrophile als auch hydrophobe Gruppen trägt, und
e) einem polare Gruppen tragenden, wasserlöslichen Polymer.

4. Verfahren nach Anspruch 1, **dadurch gekennzeichnet, daß** man Styrol zunächst in einer ersten Stufe in Masse bis zu einem Umsatz von 15 bis 70 % polymerisiert und dieses Präpolymer, welches ein Emulgierhilfsmittel enthält, in dem Suspensionsmedium suspendiert und dort in einer zweiten Stufe auspolymerisiert.

5. Verfahren nach Anspruch 4, **dadurch gekennzeichnet, daß** das Emulgierhilfsmittel ein amphiphiler organischer Emulgator, der sowohl eine hydrophile als auch eine hydrophobe Gruppe trägt, oder ein polare Gruppen enthaltendes Polymer ist.

6. Verfahren nach Anspruch 1, daß die organische Flüssigkeit ein C₁-C₃-Alkohol, ein C₃-C₅-Keton oder ein C₁-C₅-Aldehyd, vorzugsweise Ethanol, ist.

7. Teilchenförmige, expandierbare Styrolpolymerisate, **dadurch gekennzeichnet, daß** sie als Treibmittel ein Gemisch enthalten aus
- 2 bis 20 Gew.-% Wasser
- 0,1 bis 10 Gew.-% einer organischen Flüssigkeit, die mit Wasser mischbar ist, Polystyrol praktisch nicht löst und einen Siedepunkt unterhalb von 100°C aufweist,
- sowie gegebenenfalls bis zu 3 Gew.-% eines C₄-C₇-Alkans.

8. Teilchenförmige, expandierbare Styrolpolymerisate nach Anspruch 7, **dadurch gekennzeichnet, daß** das Treibmittel ein Gemisch ist aus
- 5 bis 15 Gew.-% Wasser
- 0,2 bis 10 Gew.-% Ethanol und
- 0,2 bis 2,5 Gew.-% Pentan.

## Claims

1. A process for preparing styrene polymers comprising water as blowing agent, by polymerizing styrene, where appropriate together with comonomers, in suspension, where the suspended styrene droplets comprise finely dispersed water in emulsified form and an emulsifying agent is present, which comprises using, as suspension medium, a mixture of water and an organic liquid which is miscible with water and in which polystyrene is practically insoluble, and which has a boiling point below 100°C, where the ratio by weight of water to the organic liquid is from 95:5 to 50:50.

2. A process as claimed in claim 1, wherein the suspension polymerization is carried out in one stage with no prior bulk polymerization.

3. A process as claimed in claim 2, wherein the emulsifying agent has been selected from
a) an inorganic solid substance insoluble in water and in styrene with an average particle size of not more than 20 µm and a density higher than 1.1 g/cm³,
b) recycled expandable polystyrene foam beads (recycled EPS) which comprises residues of conventional, amphiphilic coating materials deriving from its production,
c) a thermally labile organic compound which is dispersible or soluble in styrene and which at an elevated temperature becomes partially or entirely decomposed or hydrolyzed to give amphiphilic and/or hydrophilic compounds,
d) an amphiphilic organic emulsifier which bears both hydrophilic and hydrophobic groups, and
e) a polymer soluble in water and bearing polar groups.

4. A process as claimed in claim 1, wherein, in a first stage, styrene is first bulk-polymerized to a conversion of from 15 to 70%, and this prepolymer, which comprises an emulsifying agent, is suspended in the suspension medium, where its polymerization is completed in a second stage.

5. A process as claimed in claim 4, wherein the emulsifying agent is an amphiphilic organic emulsifier which bears both a hydrophilic and a hydrophobic group, or is a polymer containing polar groups.

6. A process as claimed in claim 1, wherein the organic liquid is a C₁-C₃ alcohol, a C₃-C₅ ketone, or a C₁-C₅ aldehyde, preferably ethanol.

7. A particulate, expandable styrene polymer which comprises, as blowing agent, a mixture of
- from 2 to 20% by weight of water
- from 0.1 to 10% by weight of an organic liquid which is miscible with water and in which polystyrene is practically insoluble, and which has a boiling point below 100°C,
- and also, where appropriate up to 3% by weight of a C₄-C₇ alkane

8. A particulate, expandable styrene polymer as claimed in claim 7, wherein the blowing agent is a mixture of
- from 5 to 15% by weight of water
- from 0.2 to 10% by weight of ethanol, and
- from 0.2 to 2.5% by weight of pentane.

## Revendications

1. Procédé de préparation de polymères de styrène contenant de l'eau comme agent gonflant, par polymérisation de styrène, éventuellement conjointement à des comonomères, en suspension, les gouttelettes de styrène en suspension contenant de l'eau sous forme émulsionnée en une fine répartition et un agent auxiliaire émulsionnant étant présent, **caractérisé en ce que** le milieu de suspension est un mélange d'eau et d'un liquide organique qui est miscible à l'eau, ne dissout pratiquement pas le polystyrène et présente un point d'ébullition inférieur à 100°C, le rapport pondéral entre l'eau et le liquide organique étant de 95/5 à 50/50.

2. Procédé suivant la revendication 1, **caractérisé en ce que** la polymérisation en suspension est effectuée en une étape, sans polymérisation en masse préalable.

3. Procédé suivant la revendication 2, **caractérisé en ce que** l'agent auxiliaire émulsionnant est choisi parmi
a) une substance solide inorganique insoluble dans l'eau et dans du styrène, présentant une taille moyenne de particule d'au maximum 20 µm et une densité supérieure à 1,1 g/cm³,
b) une mousse de particules de polystyrène recyclée (produit de recyclage EPS) qui, en provenance de sa préparation, contient encore des agents de revêtement amphiphiles, courants,
c) un composé organique thermolabile, soluble ou dispersable dans du styrène qui, à température élevée, est partiellement ou totalement décomposé ou hydrolysé en composés amphiphiles et/ou hydrophiles,
d) un agent émulsionnant organique amphiphile, qui porte des groupes aussi bien hydrophiles qu'hydrophobes, et
e) un polymère soluble dans l'eau portant des groupes polaires.

4. Procédé suivant la revendication 1, **caractérisé en ce que**, dans une première étape, on polymérise tout d'abord du styrène en masse jusqu'à une conversion de 15 à 70% et **en ce qu'**on met en suspension ce prépolymère, qui contient un agent auxiliaire émulsionnant, dans le milieu de suspension et on le polymérise là dans une deuxième étape.

5. Procédé suivant la revendication 4, **caractérisé en ce que** l'agent auxiliaire émulsionnant est un agent émulsionnant organique amphiphile, qui porte aussi bien un groupe hydrophile qu'un groupe hydrophobe, ou un polymère contenant des groupes polaires.

6. Procédé suivant la revendication 1, **caractérisé en ce que** le liquide organique est un alcool en C₁-C₃, une cétone en C₃-C₅ ou un aldéhyde en C₁-C₅, de préférence de l'éthanol.

7. Polymères de styrène expansibles, sous forme de particules, **caractérisés en qu**'ils contiennent, comme agent gonflant, un mélange
- de 2 à 20% en poids d'eau,
- de 0,1 à 10% en poids d'un liquide organique qui n'est pas miscible à l'eau, ne dissout pratiquement pas le polystyrène et présente un point d'ébullition inférieur à 100°C,
- ainsi qu'éventuellement de jusqu'à 3% en poids d'un alcane en C₄-C₇.

8. Polymères de styrène expansibles en forme de particules suivant la revendication 7, **caractérisés en ce que** l'agent gonflant est un mélange
- de 5 à 15% en poids d'eau,
- de 0,2 à 10% en poids d'éthanol, et
- de 0,2 à 2,5% en poids de pentane.
